# EUROPÄISCHE PATENTSCHRIFT

(11) **EP 1 832 057 B1**
(45) Veröffentlichungstag und Bekanntmachung des Hinweises auf die Patenterteilung: **23.04.2008**
(21) Anmeldenummer: 04803577.8
(22) Anmeldetag: 07.12.2004
(51) Int. Cl.: H04L 12/40

(54) **VERFAHREN ZUM ERSTELLEN VON FEHLEREINTRäGEN**
PROCESS FOR COMPILATION OF ERROR ENTRIES
PROCEDE DE COMPILATION D'ENREGISTREMENTS DE DEFAILLANCES

(43) Veröffentlichungstag der Anmeldung: 12.09.2007
(73) Patentinhaber: Bayerische Motorenwerke Aktiengesellschaft, 80809 München (DE)
(72) Erfinder: WANNER, Peter, 85591 Vaterstetten (DE); FREISTADT, Alois, 80807 München (DE)
(86) Internationale Anmeldenummer: PCT/EP2004/013885
(87) Internationale Veröffentlichungsnummer: WO 2006/061034

(56) Entgegenhaltungen:
- DE-A1- 10 107 367
- US-A1- 2004 193 954
- US-B1- 6 269 412
- LAWRENZ W: "AUTO-BUSSE IN DER INDUSTRIE EINSATZ BEI DER FELDBUS- UND SENSOR-/AKTOR-VERNETZUNG" ELEKTRONIK, WEKA FACHZEITSCR.-VERLAG, MUNCHEN, DE, vol. 39, no. 13, 22 June 1990 (1990-06-22), pages 63-69, XP000132736 ISSN: 0013-5658

## Beschreibung

Die Erfindung betrifft ein Verfahren zum Erstellen von Fehlereinträgen der Teilnehmer eines Datenbusses in einem Kraftfahrzeug.

Typische Teilnehmer eines Datenbusses, insbesondere Steuergeräte in einem Kraftfahrzeug, besitzen die Fähigkeit, Fehler des eigenen Betriebs und/oder Fehler des Ausgangsverhaltens, z.B. des Sendeverhaltens, anderer Teilnehmer des Datenbusses zu erkennen. Solche Fehler können unterschiedlicher Art und Natur, beispielsweise temporär oder dauerhaft, sicherheitskritisch oder nicht sicherheitskritisch, servicerelevant oder nicht servicerelevant sein. Als servicerelevant werden in diesem Zusammenhang Fehler bezeichnet, auf deren Auftreten hin im Falle korrekter Erkennung in einer Werkstatt typischerweise eine Service-Aktion wie etwa der Austausch oder die Reparatur eines Gerätes erfolgt.

In modernen Kraftfahrzeugen sind typischerweise mehrere Dutzend Steuergeräte enthalten. Im Fall des Erkennens eines Fehlers bei einem Teilnehmer eines Datenbusses ist es heute üblich, dass der den Fehler erkennende Teilnehmer unabhängig von der Fehlerart einen Fehlereintrag in einen Fehlerspeicher veranlasst. Dieser Fehlereintrag kann durch den erkennenden Teilnehmer selbst in einen lokalen Fehlerspeicher eingetragen werden oder es kann durch den erkennenden Teilnehmer veranlasst werden, dass ein anderer Teilnehmer einen entsprechenden Fehlereintrag vornimmt.

Durch das Veranlassen eines Fehlereintrags je erkanntem Fehler unabhängig von der Fehlerart kann in einem oder mehreren Fehlerspeichern eines Kraftfahrzeugs eine sehr große Menge von Fehlereinträgen anfallen. Zur Fehlersuche werden die Fehlereinträge, etwa in einer Service-Werkstatt, über ein Diagnosesystem ausgelesen. Eine große Anzahl von Fehlereinträgen erschwert dabei die zielgerichtete Fehlersuche. Die große Anzahl nicht servicerelevanter Fehler verhindert das schnelle und einfache Auffinden servicerelevanter Fehler.

Zudem wird die Hardware eines Fehlerspeichers durch die mit einem unnötig hohen Aufkommen an Fehlereinträgen verbundene hohe Anzahl von Schreibzyklen unnötig belastet. Dies kann zu einer Überschreitung der in der Spezifikation der Hardware des Fehlerspeichers vorgesehenen Anzahl von Schreibzyklen und/oder zum Ausfall oder Fehlfunktionen der Hardware des Fehlerspeichers führen.

Moderne Diagnosesysteme besitzen die Option, Fehlereinträge abhängig von bestimmten Kriterien, etwa ihrer Sicherheitsrelevanz, auszublenden, um beispielsweise sicherheitskritische Fehler schnell und einfach identifizieren zu können. Eine solche Vorgehensweise birgt jedoch den Nachteil, dass je nach Festlegung der Kriterien bestimmte Fehler fälschlicherweise ausgeblendet werden. Beispielsweise kann die Servicerelevanz eines Fehlers häufig nicht alleine aus der Fehlerart abgeleitet werden. Vielmehr erfordert eine Bestimmung der Servicerelevanz häufig zusätzliche Information, beispielsweise Information zu bestimmten Fahrzeugzuständen zum Zeitpunkt des Auftretens des Fehlers oder in der Folgezeit. Eine Maskierung nach Kriterien der Fehlerart kann somit unter Umständen dazu führen, dass Fehlereinträge zu servicerelevanten Fehlern übersehen werden.

Aus der DE. 10107367 A1 ist ein Verfahren zur Diagnose durch Fehlermustererkennung unter Zuordnung eines oder mehrerer Fehlersymptome zu einem physikalischen Fehler bekannt, bei welchem die Fehlersymptome zu einem Fehlermuster angeordnet werden, die Fehlermuster mit einer oder mehreren Matrizen logisch verknüpft werden und die Matrizen Informationen über die Fehlermuster bekannter physikalischer Fehler enthalten. Das Verfahren bietet zwar die Möglichkeit, wiederholte Einträge in einem Fehlerspeicher in Folge von wiederholt auftretenden Fehlern durch Erkennung der zugehörigen Fehlermuster zu vermeiden. Nachteilig an einem Verfahren gemäß der DE 10107367 A1 ist jedoch, dass es mit einem sehr hohen Speicher- und Rechenaufwand verbunden ist. Zudem werden Fehler eines bisher nicht im Fehlerspeicher abgelegten Fehlermusters, welche unter Umständen nicht servicerelevant sind, zumindest einmalig in den Fehlerspeicher eingetragen.

Aufgabe der Erfindung ist es, ein einfaches Verfahren zum Erstellen von Fehlereinträgen der Teilnehmer eines Datenbusses in einem Kraftfahrzeug zu schaffen, in welchem unnötige Fehlereinträge vermieden werden.

Die Aufgabe wird erfindungsgemäß gelöst durch ein Verfahren, in welchem beim Erkennen eines möglicherweise servicerelevanten Fehlers der erkennende Teilnehmer in einen Fehlerzustand versetzt wird und eine Fehlernachricht an einen zweiten Teilnehmer ausgibt, woraufhin von dem zweiten Teilnehmer abhängig von mindestens einer vorgegebenen Bedingung, beispielsweise der Feststellung eines Zustands, in welchem der erkannte Fehler funktionsbeeinträchtigend ist, oder des Übergangs des Kraftfahrzeugs in einen solchen Zustand, eine Aufforderung zum Erstellen eines Fehlereintrags an den erkennenden Teilnehmer ausgegeben wird und von dem erkennenden Teilnehmer im Falle des Erhalts einer solchen Aufforderung ein Fehlereintrag veranlasst wird.

Durch die Zwischenschaltung der von dem zweiten Teilnehmer geprüften zumindest einen Bedingung können unnötige Fehlereinträge vermieden werden.

Gemäß einer bevorzugten Ausführungsform der Erfindung werden Fehler, welche von einem der Teilnehmer erkannt werden, zunächst abhängig von ihrer Fehlerart einer von mindestens zwei Klassen zugewiesen. Je nach Fehlerart bzw. Klasse wird anschließend umgehend ein Fehlereintrag veranlasst oder es wird verfahren wie oben beschrieben. Beim Erkennen eines Fehlers mindestens einer ersten Klasse, beispielsweise der Klasse sicherheitsrelevanter und/oder in jedem Fall servicerelevanter Fehler, wird umgehend von dem erkennenden Teilnehmer ein Fehlereintrag veranlasst. Beim Erkennen eines Fehlers mindestens einer zweiten Klasse, beispielsweise der Klasse der nicht sicherheitsrelevanten und nur unter Umständen servicerelevanten Fehler, wird der erkennende Teilnehmer in einen Fehlerzustand versetzt und eine Fehlernachricht an einen zweiten Teilnehmer ausgegeben, woraufhin von dem zweiten Teilnehmer abhängig von mindestens einer Bedingung eine Aufforderung zum Erstellen eines Fehlereintrags an den erkennenden Teilnehmer ausgegeben wird und von dem erkennenden Teilnehmer im Falle des Erhalts einer solchen Aufforderung ein Fehlereintrag veranlasst wird.

Durch die Zuordnung der Fehler zu mindestens zwei Klassen besteht die Möglichkeit, Fehler zumindest einer bestimmten Klasse auf jeden Fall zu speichern, während Fehler zumindest einer anderen Klasse näher auf die Notwendigkeit bzw. Sinnhaftigkeit eines Fehlereintrags geprüft werden können.

Ein vorzunehmender Fehlereintrag kann durch den erkennenden Teilnehmer selbst in einen lokalen Fehlerspeicher eingetragen werden oder es kann durch den erkennenden Teilnehmer veranlasst werden, dass ein anderer Teilnehmer einen entsprechenden Fehlereintrag vornimmt. Denkbar ist hierbei etwa die Veranlassung eines Fehlereintrags in einem zentralen Fehlerspeicher oder die Veranlassung eines Fehlereintrags im Fehlerspeicher eines Teilnehmers, welcher der Fehlerquelle in einer hierarchischen Struktur näher steht als der erkennende Teilnehmer.

Sowohl die Fehlererkennung als auch das Vornehmen von Fehlereinträgen kann kaskadiert erfolgen. Beispielsweise kann ein Teilnehmer A, der einen Fehler erkannt hat, sich selbst in einen Fehlerzustand versetzen und eine Fehlernachricht an einen Teilnehmer B ausgeben, der Teilnehmer B hat somit ebenfalls den Fehler erkannt, versetzt sich selbst in einen Fehlerzustand und gibt eine Fehlernachricht an einen Teilnehmer C aus, der Teilnehmer C gibt nach dem Erhalt der Fehlernachricht abhängig von mindestens einer vorgegebenen Bedingung eine Aufforderung zum Erstellen eines Fehlereintrags an den Teilnehmer B aus, der Teilnehmer B gibt abhängig von einer vorgegebenen Bedingung, nämlich dem Erhalt der Aufforderung des Teilnehmers C, eine Aufforderung zum Erstellen eines Fehlereintrags an den Teilnehmer A aus, woraufhin der Teilnehmer A den Fehlereintrag vornimmt.

Ein erfindungsgemäßes Verfahren eignet sich insbesondere zur Anwendung auf eine hierarchische Struktur von Teilnehmern. Bei der Anwendung eines erfindungsgemäßen Verfahrens auf eine, beispielsweise funktionsbedingte, hierarchische Struktur entscheidet typischerweise ein übergeordneter Teilnehmer darüber, ob ein untergeordneter Teilnehmer einen Fehlereintrag vorzunehmen oder zu veranlassen hat.

Ein Teilnehmer, der einen Fehler erkannt, eine Fehlernachricht gesendet und sich selbst in einen Fehlerzustand versetzt hat, verbleibt typischerweise zunächst in diesem Fehlerzustand. Dieser Fehlerzustand kann mit Einschränkungen der Funktion des Teilnehmers verbunden sein und sollte nicht unnötig lange aufrecht erhalten werden. Ein effizientes Vorgehen, um den Fehlerzustand möglichst bald, aber nicht zu früh wieder aufzuheben, liegt nun darin, den Fehlerzustand nach dem Ablauf einer vorgegebenen Zeitkonstante, in welchem sich der erkennende Teilnehmer im Fehlerzustand befand, aber keine Aufforderung zur Fehlerspeicherung erhalten hat, wieder aufzuheben. Ebenso kann es sachdienlich sein, den Fehlerzustand nach dem Auftreten mindestens eines vorgegebenen Ereignisses aufzuheben. Insbesondere kann ein solches Ereignis in dem Wegfall des Fehlers, der zum Übergang in den Fehlerzustand geführt hat, in der Erkennung eines solchen Wegfalls oder darin bestehen, dass eine Aufforderung erhalten wird, den Fehler nicht einzutragen. Gemäß einer vorteilhaften Ausführungsform der Erfindung wird ein Fehlerzustand eines erkennenden Teilnehmers also nach dem Ablauf einer vorgegebenen Zeitkonstante ohne den Erhalt einer Aufforderung zum Veranlassen eines Fehlereintrags und/oder nach dem Auftreten mindestens eines vorgegebenen Ereignisses, insbesondere des Wegfalls des Fehlers, aufgehoben.

Beispielsweise um Synchronisationsprobleme zu vermeiden, kann es bei einer durch ein Ereignis ausgelösten Aufhebung des Fehlerzustands sinnvoll sein, den Fehlerzustand frühestens nach dem Ablauf einer vorgegebenen und ab dem Wegfall, dessen Feststellung bzw. einem anderen Ereignis zu bemessenden Zeitkonstante aufzuheben.

Ein weiterer Vorteil eines erfindungsgemäßen Verfahrens liegt darin, dass die effiziente Steuerung der Speicherung von Fehlereinträgen gleichsam Anwendung für die effiziente Steuerung von Warnhinweisen an den Fahrer des Kraftfahrzeugs finden kann. Wie für die Speicherung von Fehlereinträgen gilt auch für Warnhinweise an den Fahrer, dass möglichst nur sicherheits- und servicerelevante Fehler angezeigt werden sollten. Gemäß einer Weiterbildung der Erfindung wird dementsprechend beim Auftreten eines Fehlers einer bestimmten Klasse, z. B. eines sicherheitsrelevanten Fehlers, umgehend ein Warnhinweis veranlasst. Beim Auftreten eines Fehlers einer anderen Klasse hingegen, z. B. eines nicht sicherheitsrelevanten und nur möglicherweise servicerelevanten Fehlers, wird nur dann und frühestens dann ein Warnhinweis ausgegeben, wenn einer der Teilnehmer eine Aufforderung oder eine Veranlassung zu einem Fehlereintrag ausgibt.

Gemäß einer besonders vorteilhaften Ausführung der Erfindung wird ein solcher Warnhinweis von dem Teilnehmer, der die Aufforderung zum Erstellen eines Fehlereintrags ausgibt, quasi-gleichzeitig mit der Ausgabe der Aufforderung veranlasst.

Weitere Einzelheiten der Erfindung ergeben sich aus der nachstehenden Beschreibung und den beigefügten Zeichnungen, durch welche eine bevorzugte Ausführungsform der Erfindung beispielhaft veranschaulicht wird. In den Zeichnungen zeigen
- Fig. 1: schematisch einen Datenbus in einem Kraftfahrzeug mit mehreren Teilnehmern und
- Fig. 2: den Kommunikationsablauf in einem erfindungsgemäßen Verfahren unter der Beteiligung zweier Teilnehmer.

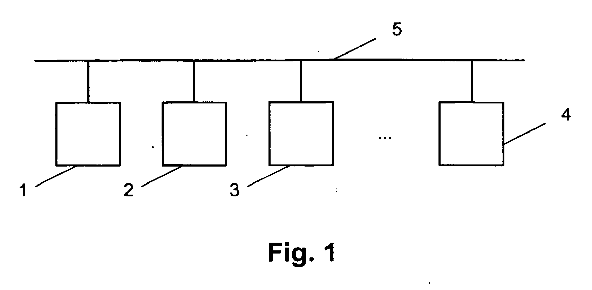

Ein Datenbus 5 mit mehreren Teilnehmern 1, 2, 3, 4 etc. in einem Kraftfahrzeug ist schematisch in Fig. 1 dargestellt.

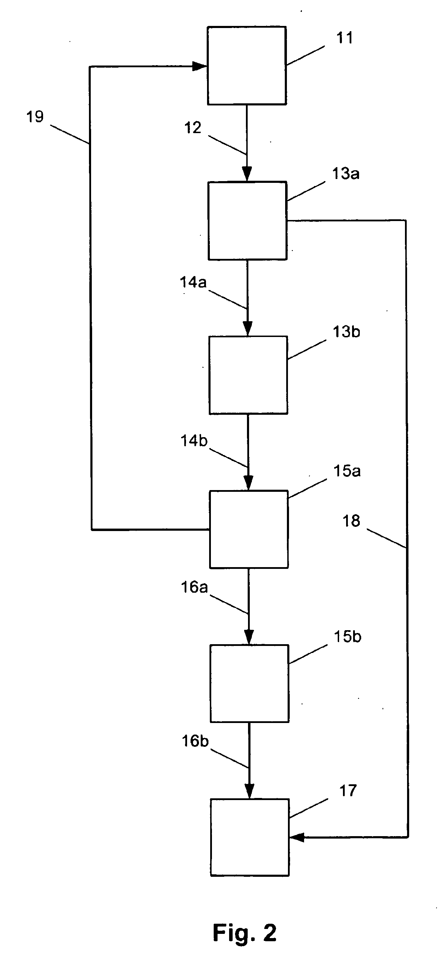

Fig. 2 zeigt den Kommunikationsablauf in einem erfindungsgemäßen Verfahren unter der Beteiligung zweier Teilnehmer 1 und 2 des Datenbusses aus Fig. 1. Teilnehmer 1 ist Teilnehmer 2 dabei funktionsbedingt hierarchisch untergeordnet.

Im Ausgangszustand 11 befindet sich Teilnehmer 1 nicht in einem Fehlerzustand, der Fehlerspeicher des Teilnehmers 1 ist leer.

Ein Zustandsübergang 12 in einen Zustand 13a folgt aus dem Ereignis, dass Teilnehmer 1 einen Fehler erkennt. In Fall des Beispiels besteht der Fehler in dem Ausbleiben einer Nachricht einer erwarteten Nachricht eines anderen Teilnehmers.

Im Zustand 13a bestimmt Teilnehmer 1 die Klasse eines solchen Fehlers und der Fehler wird einer von zwei Klassen zugeordnet. Die Fehlerklasse 1 umfasst sicherheitsrelevante und in jedem Fall servicerelevante Fehler. Die Fehlerklasse 2 umfasst nicht sicherheitsrelevante und nur unter Umständen servicerelevante Fehler. Teilnehmer 1 ordnet den im Beispiel erkannten Fehler der Fehlerklasse 2 zu. Dies führt zum Zustandsübergang 14a in den Zustand 13b.

Begleitend mit dem Zustandsübergang 14a sendet Teilnehmer 1 eine Fehlernachricht an den ihm funktionsbedingt hierarchisch übergeordneten Teilnehmer 2. Die Fehlernachricht enthält verschiedene Informationen zu dem erkannten Fehler, z. B. die Fehlerart "ausbleibende Nachricht eines Sensors", den Zeitpunkt der Fehlererkennung und die Fehlerquelle. Teilnehmer 1 versetzt sich außerdem in einen Fehlerzustand, indem ein entsprechendes Datenbit gesetzt wird.

Im Zustand 13b hat Teilnehmer 1 die Fehlernachricht gesendet, Teilnehmer 2 diese aber noch nicht erhalten. Der Empfang der Fehlernachricht durch Teilnehmer 2 führt zum Zustandsübergang 14b in den Zustand 15a.

Im Zustand 15a hat Teilnehmer 2 die Fehlernachricht des Teilnehmers 1 empfangen und entscheidet anhand mindestens einer vorgegebenen Bedingung, ob eine Aufforderung zum Erstellen eines Fehlereintrags an den erkennenden Teilnehmer ausgegeben wird oder ob eine Aufforderung an den erkennenden Teilnehmer ausgegeben wird, den Fehlerzustand wieder aufzuheben. Im Fall des Beispiels soll eine Aufforderung zum Erstellen eines Fehlereintrags an den erkennenden Teilnehmer nur dann ausgegeben werden, wenn eine Funktion, an welcher der Teilnehmer 1 beteiligt ist, anhand eines Fahrzeugzustands, hier der Fahrgeschwindigkeit, als aktivierbar gekennzeichnet ist, und der Fahrer des Kraftfahrzeugs innerhalb einer vorgegebenen Zeitkonstante, hier 60 Sekunden, versucht, diese Funktion zu aktivieren. Ansonsten soll eine Aufforderung an den erkennenden Teilnehmer ausgegeben werden, den Fehlerzustand wieder aufzuheben. Zum Abgleich einer bis zum Zeitpunkt eines vom Fahrer des Kraftfahrzeugs unternommenen Versuchs der Aktivierung vergangenen Zeitspanne mit der vorgegebenen Zeitkonstante wird beim Übergang in den Zustand 15a ein Timer gestartet.

Der Zustandsübergang 16a wird nach einer Zeitspanne, welche geringer ist als die vorgegebene Zeitkonstante, ausgelöst durch einen Versuch des Fahrers des Kraftfahrzeugs, eine Funktion zu aktivieren, an welcher der Teilnehmer 1 beteiligt ist und welche anhand der Fahrgeschwindigkeit als aktivierbar gekennzeichnet ist.

Begleitend mit dem Zustandsübergang 16a sendet Teilnehmer 2 eine Aufforderung zum Erstellen eines Fehlereintrags an den Teilnehmer 1 und veranlasst die Ausgabe eines Warnhinweises an den Fahrer des Kraftfahrzeugs.

Im Zustand 15b hat Teilnehmer 2 die Aufforderung gesendet, Teilnehmer 1 diese aber noch nicht erhalten. Der Empfang der Aufforderung durch Teilnehmer 1 führt zum Zustandsübergang 16b in den Zustand 17.

Im Zustand 17 nimmt Teilnehmer 1 einen Fehlereintrag im Fehlerspeicher vor.

Hätte Teilnehmer 1 den erkannten Fehler im Zustand 13 der Fehlerklasse 1 zugeordnet, wären ein sofortiger Zustandsübergang 18 in den Zustand 17 und die sofortige Veranlassung eines Warnhinweises an den Fahrer des Kraftfahrzeugs die Konsequenz gewesen. Dies wäre etwa der Fall gewesen bei einem Fehler der Fehlerart "Bauteil X defekt".

Verstreicht die Zeitkonstante im Zustand 15a, ohne einen Versuch des Fahrers des Kraftfahrzeugs, eine Funktion zu aktivieren, an welcher der Teilnehmer 1 beteiligt ist und welche anhand der Fahrgeschwindigkeit als aktivierbar gekennzeichnet ist, so wird dadurch der Zustandsübergang 19 ausgelöst. Der Fehlerzustand des Teilnehmers 1 wird wieder aufgehoben, der Fehlerspeicher des Teilnehmers 1 bleibt leer. Der Teilnehmer 1 befindet sich somit wieder im Ausgangszustand 11.

Gemäß einem hier nicht bildlich dargestellten weiteren Ausführungsbeispiel wird die durch den Teilnehmer 1 vom Teilnehmer 2 empfangene Aufforderung zum Vornehmen eines Fehlereintrags von dem Teilnehmer 1 an einen dem Teilnehmer 1 funktionsbedingt hierarchisch untergeordneten Teilnehmer 3 weitergegeben. Dies ist insbesondere dann sinnvoll, wenn beim Teilnehmer 1 bekannt ist, dass Teilnehmer 3 die Fehlerquelle darstellt oder sich zumindest in einer Hierarchie der Teilnehmer näher an der Fehlerquelle befindet als Teilnehmer 1.

Gemäß einem hier nicht bildlich dargestellten weiteren Ausführungsbeispiel wird die durch den Teilnehmer 1 vom Teilnehmer 2 empfangene Aufforderung zum Vornehmen eines Fehlereintrags von dem Teilnehmer 1 an einen mit einem zentralen Fehlerspeicher ausgestatteten Teilnehmer 3 weitergegeben.

Gemäß einem hier nicht bildlich dargestellten weiteren Ausführungsbeispiel wird die durch den Teilnehmer 2 vom Teilnehmer 1 empfangene Fehlernachricht an einen dem Teilnehmer 2 funktionsbedingt hierarchisch übergeordneten Teilnehmer 4 weitergegeben. Teilnehmer 2 wird dadurch gemäß diesem Ausführungsbeispiel ebenfalls in einen Fehlerzustand versetzt. Eine Aufforderung zum Veranlassen eines Fehlereintrags, welche Teilnehmer 2 von Teilnehmer 4 erhält, wird an Teilnehmer 1 weitergeleitet. Gemeinsam mit einer solchen Aufforderung oder unabhängig hiervon teilt Teilnehmer 4 den untergeordneten Teilnehmern mit, welche Fehlerzustände beizubehalten oder aufzuheben sind.

Eine Erweiterung der erfindungsgemäß versendeten Fehlernachrichten und Aufforderungen um zusätzliche Inhalte wie Fehlerparameter, Angaben zu möglicherweise und/oder faktisch durch den Fehler funktionsbeeinträchtigten Teilnehmern sowie Aktionsanweisungen sind ebenfalls angedacht und liegen im Bereich der Erfindung.

Die Anwendung eines erfindungsgemäßen Verfahrens führt dazu, dass ausschließlich sicherheitsrelevante und/oder servicerelevante Fehler in einen Fehlerspeicher eingetragen werden. Die Fehlersuche in einer Werkstatt wird dadurch erheblich vereinfacht und beschleunigt.

## Patentansprüche

1. Verfahren zum Erstellen von Fehlereinträgen der Teilnehmer (1, 2, 3, 4) eines Datenbusses (5) in einem Kraftfahrzeug, **dadurch gekennzeichnet,**
**dass** beim Erkennen eines Fehlers der erkennende Teilnehmer (1, 2, 3, 4) in einen Fehlerzustand versetzt wird und eine Fehlernachricht an einen zweiten Teilnehmer (1, 2, 3, 4) ausgibt,
**dass** von dem zweiten Teilnehmer (1, 2, 3, 4) nach dem Erhalt einer solchen Fehlernachricht abhängig von mindestens einer vorgegebenen Bedingung eine Aufforderung zum Erstellen eines Fehlereintrags an den erkennenden Teilnehmer (1, 2, 3, 4) ausgegeben wird und
**dass** von dem erkennenden Teilnehmer (1, 2, 3, 4) im Falle des Erhalts einer solchen Aufforderung ein Fehlereintrag veranlasst wird.

2. Verfahren nach Anspruch 1, **dadurch gekennzeichnet,**
**dass** Fehler, welche von einem der Teilnehmer (1, 2, 3, 4) erkannt werden, einer von mindestens zwei Klassen zugewiesen werden und
**dass** beim Erkennen eines Fehlers einer bestimmten Klasse umgehend von dem erkennenden Teilnehmer (1, 2, 3, 4) ein Fehlereintrag veranlasst wird.

3. Verfahren nach einem der Ansprüche 1 oder 2, **dadurch gekennzeichnet,**
**dass** ein Fehlereintrag lokal bei dem erkennenden Teilnehmer (1, 2, 3, 4) erstellt wird.

4. Verfahren nach einem der Ansprüche 1 bis 3, **dadurch gekennzeichnet,**
**dass** von dem erkennenden Teilnehmer (1, 2, 3, 4) ein Fehlereintrag bei einem dritten Teilnehmer (1, 2, 3, 4) veranlasst wird.

5. Verfahren nach einem der Ansprüche 1 bis 4, **dadurch gekennzeichnet,**
**dass** die Fehlererkennung und/oder die Aufforderung zum Vornehmen eines Fehlereintrags kaskadiert erfolgt.

6. Verfahren nach einem der Ansprüche 1 bis 5, **dadurch gekennzeichnet,**
**dass** der erste Teilnehmer (1, 2, 3, 4) dem zweiten Teilnehmer (1, 2, 3, 4) in einer hierarchischen Struktur untergeordnet ist.

7. Verfahren nach einem der Ansprüche 4 bis 6, **dadurch gekennzeichnet,**
**dass** der erste Teilnehmer (1, 2, 3, 4) dem dritten Teilnehmer (1, 2, 3, 4) in einer hierarchischen Struktur übergeordnet ist.

8. Verfahren nach einem der Ansprüche 1 bis 7, **dadurch gekennzeichnet,**
**dass** ein Fehlerzustand des erkennenden Teilnehmers (1, 2, 3, 4) nach dem Ablauf einer vorgegebenen Zeitkonstante ohne den Erhalt einer Aufforderung des zweiten Teilnehmers (1, 2, 3, 4) und/oder nach dem Auftreten mindestens eines vorgegebenen Ereignisses, insbesondere des Wegfalls des Fehlers, aufgehoben wird.

9. Verfahren nach einem der Ansprüche 1 bis 8, **dadurch gekennzeichnet,**
**dass** frühestens im Fall eines Fehlereintrags ein Warnhinweis an den Fahrer des Kraftfahrzeugs ausgegeben wird.

10. Verfahren nach Anspruch 9, **dadurch gekennzeichnet,**
**dass** der Warnhinweis von dem zweiten Teilnehmer (1, 2, 3, 4) gleichzeitig mit der Ausgabe der Aufforderung zum Erstellen eines Fehlereintrags veranlasst wird.

## Claims

1. A method for the compilation of error entries by the users (1, 2, 3, 4) of a data bus (5) in a motor vehicle, **characterised in that** on recognising an error, the recognising user (1, 2, 3, 4) is put into an error state and outputs an error message to a second user (1, 2, 3, 4), **in that** after receiving an error message of this type, the second user (1, 2, 3, 4) outputs a prompt to the recognising user (1, 2, 3, 4) to make an error entry as a function of at least one predetermined condition and **in that** the recognising user (1, 2, 3, 4) initiates an error entry if it receives a prompt of this type.

2. A method according to claim 1, **characterised in that** errors which are recognised by one of the users (1, 2, 3, 4) are assigned to one of at least two classes and **in that** on recognising an error of a specific class, the recognising user (1, 2, 3, 4) immediately initiates an error entry.

3. A method according to either claim 1 or 2, **characterised in that** an error entry is made locally at the recognising user (1, 2, 3, 4).

4. A method according to any one of claims 1 to 3, **characterised in that** the recognising user (1, 2, 3, 4) initiates an error entry at a third user (1, 2, 3, 4).

5. A method according to any one of claims 1 to 4, **characterised in that** the error recognition and/or the prompt to make an error entry takes place in a cascade manner.

6. A method according to any one of claims 1 to 5, **characterised in that** the first user (1, 2, 3, 4) is subordinate to the second user (1, 2, 3, 4) in a hierarchical structure.

7. A method according to any one of claims 4 to 6, **characterised in that** the first user (1, 2, 3, 4) is superior to the third user (1, 2, 3, 4) in a hierarchical structure.

8. A method according to any one of claims 1 to 7, **characterised in that** an error state of the recognising user (1, 2, 3, 4) is cancelled after the expiry of a predetermined time constant in the absence of receiving a prompt from the second user (1, 2, 3, 4) and/or after the occurrence of at least one predetermined event, in particular the cessation of the error.

9. A method according to any one of claims 1 to 8, **characterised in that** at the earliest in the case of an error entry, a warning indication is output to the driver of the motor vehicle.

10. A method according to claim 9, **characterised in that** the warning indication is initiated by the second user (1, 2, 3, 4) at the same time as the output of the prompt to make an error entry.

## Revendications

1. Procédé de compilation d'enregistrements de défaillances des utilisateurs (1, 2, 3, 4) d'un bus de données (5) dans un véhicule automobile,
**caractérisé en ce que**
lors de la détection d'une défaillance, l'utilisateur détecteur (1, 2, 3, 4) est mis dans un état de défaillance et envoie un message de défaillance à un deuxième utilisateur (1, 2, 3, 4), le deuxième utilisateur (1, 2, 3, 4) après réception d'un tel message de défaillance envoie une demande de compilation d'enregistrements de défaillances à l'utilisateur détecteur (1, 2, 3, 4) en fonction d'au moins une condition prédéfinie, et l'utilisateur détecteur (1, 2, 3, 4) ordonne un enregistrement de défaillance s'il reçoit une telle demande.

2. Procédé selon la revendication 1,
**caractérisé en ce que**
les défaillances qui sont détectées par un des utilisateurs (1, 2, 3, 4) sont attribuées en fonction de leur type à l'au moins une de deux classes, et lors de la détection d'une défaillance d'une classe précise, l'utilisateur détecteur (1, 2, 3, 4) ordonne immédiatement un enregistrement de défaillance.

3. Procédé selon la revendication 1 ou 2,
**caractérisé en ce qu'**
un enregistrement de défaillance peut être effectué localement auprès de l'utilisateur détecteur (1, 2, 3, 4).

4. Procédé selon l'une des revendications 1 à 3,
**caractérisé en ce que**
l'utilisateur détecteur (1, 2, 3, 4) ordonne un enregistrement de défaillance auprès d'un troisième utilisateur (1, 2, 3, 4).

5. Procédé selon l'une des revendications 1 à 4,
**caractérisé en ce que**
la détection de défaillance et/ou la demande d'effectuer un enregistrement de défaillance s'effectue(nt) en cascade.

6. Procédé selon l'une des revendications 1 à 5,
**caractérisé en ce que**
le premier utilisateur (1, 2, 3, 4) est inférieur au deuxième utilisateur (1, 2, 3, 4) dans une structure hiérarchique.

7. Procédé selon l'une des revendications 4 à 6,
**caractérisé en ce que**
le premier utilisateur (1, 2, 3, 4) est supérieur au troisième utilisateur (1, 2, 3, 4) dans une structure hiérarchique.

8. Procédé selon l'une des revendications 1 à 7,
**caractérisé en ce qu'**
un état de défaillance de l'utilisateur détecteur (1, 2, 3, 4) est supprimé après le déroulement d'une constante de temps prédéfinie, sans la réception d'une demande du deuxième utilisateur (1, 2, 3, 4) et/ou après la survenue d'au moins un évènement prédéfini, en particulier la suppression de la défaillance.

9. Procédé selon l'une des revendications 1 à 8,
**caractérisé en ce qu'**
au plus tôt lors d'un enregistrement de défaillance, un avertissement est envoyé au conducteur du véhicule automobile.

10. Procédé selon la revendication 10,
**caractérisé en ce que**
l'avertissement est ordonné par le deuxième utilisateur (1, 2, 3, 4) parallèlement à l'émission de la demande de compilation d'un enregistrement de défaillance.
